# FASCICULE DE BREVET EUROPEEN

(11) **EP 3 113 939 B1**
(45) Date de publication et mention de la délivrance du brevet: **02.05.2018**
(21) Numéro de dépôt: 15707971.6
(22) Date de dépôt: 05.03.2015
(51) Int. Cl.: B29D 30/24

(54) **TAMBOUR D'ASSEMBLAGE POUR LA FABRICATION DE PNEUMATIQUES**
REIFENAUFBAUTROMMEL
ASSEMBLY DRUM FOR MANUFACTURING TYRES

(30) Priorité: 07.03.2014 FR 1451866
(43) Date de publication de la demande: 11.01.2017
(73) Titulaire: Compagnie Générale des Etablissements Michelin, 63000 Clermont-Ferrand (FR)
(72) Inventeur: BOR, Gérard, F-63040 Clermont-Ferrand Cedex 9 (FR)
(74) Mandataire: Noel, Luminita
(86) Numéro de dépôt international: PCT/EP2015/054656
(87) Numéro de publication internationale: WO 2015/132351

(56) Documents cités:
- WO-A2-02/053355
- FR-A1- 2 509 663
- US-A- 3 778 326
- US-A- 4 149 927
- US-A- 4 780 170
- US-A- 5 047 108

## Description

La présente invention concerne un tambour d'assemblage pour la fabrication de pneumatiques.

L'invention concerne plus particulièrement un tambour d'assemblage possédant des épaulements sur lesquels la ou les tringles sont déposées au cours de l'assemblage par une approche latérale sur lesdits épaulements. Un tel tambour permet des mises en place successives sur la surface externe cylindrique de réception des différentes nappes à base de caoutchouc, dont une nappe carcasse, et l'installation, sur les épaulements situés au voisinage des extrémités axiales de la surface de réception, des tringles et des produits semi-finis ou profilés à base de mélange caoutchouteux et leur maintien assemblé avec les nappes à base de caoutchouc précédemment mises en place et repliées au niveau des épaulements. La tringle et les produits semi-finis sont maintenus contre l'épaulement par collage des produits entre eux.

Le retrait du tambour de la carcasse formée sur celui-ci nécessite une réduction de la circonférence du tambour pour libérer la carcasse et assurer un dégagement entre la circonférence extérieure du tambour et la circonférence intérieure de la carcasse. Le tambour doit donc être rétractable radialement afin de pouvoir retirer l'ébauche de pneumatique ainsi constituée. Un tel tambour comporte généralement une pluralité de segments mobiles radialement entre une position déployée ou de travail du tambour et une position rétractée de celui-ci. Par ailleurs, certaines carcasses de pneumatique présentent des épaulements inclinés qui nécessitent, de plus, un retrait axial des segments.

Ainsi, la publication WO 02/053355 au nom des demanderesses décrit un tel tambour d'assemblage expansible à épaulements inclinés. Le tambour d'assemblage comporte un corps monté rotatif sur un arbre central comportant une surface cylindrique d'assemblage formée de plusieurs segments à épaulements. Les segments sont circonférentiellement adjacents, ils sont munis de plaques de recouvrement pour garantir une face externe de forme circulaire et sont montés à déplacement radial et axial entre une position expansée du tambour et une position rétractée du tambour. Un inconvénient de ce tambour est l'utilisation des valves à vide reliées à un circuit pneumatique dans le but d'assurer le maintien des composants au niveau des épaulements, ce qui nécessite une source d'alimentation complémentaire, complique la construction du tambour et le rend moins fiable en fonctionnement. Un autre inconvénient d'un tel tambour concerne l'actionnement des segments qui est fait à l'aide d'une biellette qui suit le profil d'une came en position dépliée, le retour vers la position rétractée étant assuré par une membrane élastique qui enveloppe les segments, ce qui pose de soucis de fiabilité lors de l'usure ou du vieillissement de la membrane. De surcroît, le tambour comporte un grand nombre de segments, nombre qui augmente avec la différence de diamètre entre la position de travail et celle rétractée du tambour. De ce fait, ce tambour ne convient pas pour la confection des carcasses de petit diamètre, ni pour celles présentant une différence importante entre le diamètre de la surface externe cylindrique et le diamètre mesuré au niveau des talons de celles-ci.

Une solution a été décrite dans le document FR 2 509 663 où le tambour comporte deux groupes différents de segments, du type clés et voûtes, agencés successivement dans la direction circonférentielle. Les segments sont montés mobiles entre une position dépliée du tambour dans laquelle tous les segments sont adjacents circonférentiellement et une position rétractée du tambour dans laquelle les segments sont décalés radialement et sont en retrait. Chaque segment est relié par des bras articulés d'actionnement à un coulisseau central mobile axialement, deux coulisseaux coaxiaux étant prévus à l'intérieur du tambour, l'un relié aux segments clés et l'autre aux segments voûtes. Le tambour comporte également des moyens de déplacement des coulisseaux.

Les épaulements sont reliés par un mécanisme à secteur denté et crémaillère aux bras d'actionnement des segments, mécanisme qui assure leur déplacement axial par rapport aux segments et en même temps que ceux-ci afin de permettre l'extraction de l'ébauche de pneumatique confectionnée sur le tambour. Le réglage de toutes les crémaillères s'avère difficile pour arriver à obtenir des segments concentriques et parallèles à l'axe du tambour.

Dans une variante, le tambour comprend des épaulements montés articulés sur les segments. Chaque épaulement est monté à l'aide d'un tirant articulé sur un élément articulé monté à ressort de traction par rapport au segment. L'actionnement de l'élément articulé se fait moyennant un secteur denté d'un bras d'actionnement d'un segment qui vient en prise avec une came articulée et qui pousse le tirant de l'épaulement vers l'extérieur en position dépliée du tambour. Une telle solution à ressort de traction pose des problèmes de fiabilité en cas de blocage ou de rupture du ressort.

Les épaulements étant liés cinématiquement aux segments, le mouvement radial des segments provoque simultanément le déplacement des épaulements soit dans une direction axiale de coulissement, soit en pivotement autour d'un axe perpendiculaire à l'axe du tambour pour dégager les épaulements par rapport aux parties qui forment le talon de l'ébauche de pneumatique.

Toutefois, le mécanisme d'actionnement des segments et épaulements du tambour selon ce document est complexe et encombrant, ce qui a des conséquences sur les dimensions, la fiabilité et le coût du tambour. De surcroît, de par le nombre important des pièces articulées constituant le tambour, des battements et jeux de fonctionnement importants sont à prendre en compte, jeux qui s'amplifient avec l'usure des mécanismes.

L'invention vise à pallier l'ensemble de ces inconvénients.

De surcroît, le besoin d'un tambour d'assemblage rétractable ayant des épaulements de hauteur suffisante pour permettre la confection d'une ébauche de pneumatique dont la zone des talons soit réalisée uniquement par approche latérale, sans mouvements de gomme au niveau de l'épaulement du tambour est toujours présent.

Cet objectif est atteint par l'invention qui propose un tambour d'assemblage comme défini dans la revendication 1, pour la fabrication d'un pneumatique, ledit tambour comprenant un support, un arbre central et une surface circonférentielle externe coaxiale à l'axe de rotation du tambour et comportant une surface principale cylindrique délimitée axialement par un épaulement se prolongeant par une protubérance latérale de réception de produits à assembler, plusieurs segments définissant ensemble la surface principale cylindrique, lesdits segments étant divisés en des premier et deuxième groupe de segments adjacents montés mobiles entre une première position dans laquelle ils sont juxtaposés circonférentiellement et une deuxième position dans laquelle les segments adjacents sont décalés radialement, dans ledit tambour plusieurs leviers coudés adjacents formant, en position expansée du tambour, l'épaulement et la protubérance et chaque levier coudé étant monté articulé sur le segment et sur le support.

Un tel levier coudé comprend au moins deux bras rigides qui font un angle donné entre eux. Le levier coudé constitue la forme qui, par révolution autour de l'axe du tambour, définit la surface de l'épaulement et celle de la protubérance latérale du tambour d'assemblage, surfaces qui sont coaxiales à la surface externe cylindrique et à l'axe de rotation du tambour. Un tel levier coudé est suffisamment rigide afin de pouvoir encaisser sans se déformer les efforts de rouletage appliqués sur les épaulements lors de l'assemblage pour faire adhérer les composants entre eux.

Le montage articulé du levier coudé sur le bord de chaque segment et sur le support permet, lors d'un actionnement en pivotement du levier autour du support, un basculement de grande amplitude de la partie latérale du tambour lors du retrait radial des segments et un retour vers sa position rétractée, et ceci de manière fiable en fonctionnement. Ceci autorise une grande hauteur de l'épaulement du tambour, tout en limitant les jeux et battements dans les articulations. Par ailleurs, un tel basculement du levier coudé permet de retirer la carcasse sans contraindre ou provoquer le glissement des composants assemblés entre eux.

Un tel tambour permet de réaliser la zone des talons uniquement par une approche latérale des composants sur le tambour, sans contraindre ces composants (on comprend sans pliage ou déformation d'un des composants au niveau de l'épaulement) lors de l'assemblage de la carcasse sur le tambour, tout en empêchant le glissement des composants entre eux lors de l'extraction de la carcasse. La zone des talons de la carcasse ou ébauche de pneumatique ainsi obtenue est proche de la forme finale de celui-ci.

Des formes préférentielles de l'invention sont définies dans les revendications dépendantes 2 à 10.

De préférence, le tambour de l'invention comprend des moyens d'actionnement positif en pivotement de chaque levier coudé autour d'un axe perpendiculaire à l'axe du tambour.

Par moyens d'actionnement positif en pivotement, on comprend des moyens comprenant un organe mécanique en mouvement qui entraîne le levier coudé en pivotement par contact direct ou par intermédiaire d'éléments rigides lors du déplacement des segments vers la position expansée ou rétractée du tambour. Un tel actionnement positif permet d'assurer un pivotement fiable du levier de manière à ce que l'articulation qui relie le levier coudé à l'extrémité du segment puisse passer d'une première position, dans laquelle elle se trouve au niveau de la surface cylindrique extérieure du segment et surplombe la deuxième articulation qui relie le levier au support, à une deuxième position dans laquelle il descend au moins sensiblement au même niveau que celui de la deuxième.

Selon un aspect avantageux de l'invention, les segments comprennent des parties d'extrémité déplaçables axialement et radialement entre une première position dans laquelle la surface principale cylindrique des segments présente un diamètre et une longueur axiale supérieures à ceux d'une deuxième position.

De préférence, les segments comprennent des parties centrales supportées moyennant des bras radiaux par une couronne centrale montée sur l'arbre central du tambour et que lesdites parties d'extrémité sont montées à coulissement par rapport aux parties centrales.

Selon l'invention, ledit levier coudé est une pièce rigide monobloc ayant une forme générale en Z. Un tel levier comprend trois bras, le premier et le deuxième définissant les surfaces de l'épaulement et de la protubérance latérale, alors que le troisième sert d'actionnement en pivotement.

Avantageusement, les leviers coudés sont mobiles en pivotement autour d'un axe perpendiculaire à l'axe longitudinal du tambour en étant entraînés par une couronne mobile en translation sur l'arbre central. Le déplacement axial, parallèlement à l'axe longitudinal du tambour, d'une couronne venant en prise avec l'une des extrémités de chaque levier entraîne directement le mouvement de pivotement du levier coudé autour d'un axe de pivotement du support qui est perpendiculaire à l'axe longitudinal du tambour.

Selon un aspect avantageux de l'invention, chaque couronne est reliée à un groupe de segments et les couronnes sont montées à distance l'une par rapport à l'autre sur l'arbre central. Ceci permet d'actionner de manière indépendante chaque groupe de segments.

De préférence, le tambour selon l'invention comprend des moyens d'actionnement en un rapprochement ou un éloignement symétrique des couronnes l'une par rapport à l'autre.

Selon un aspect avantageux de l'invention, lesdits moyens d'actionnement comprennent une plaque de butée solidaire de la couronne et montée avec un jeu axial préétabli par rapport à la couronne. Ceci permet d'actionner et déplacer en premier un groupe de segments.

Selon l'invention, le levier coudé comprend un bras sensiblement radial en position expansée de hauteur supérieure ou égale à 50 mm. La hauteur du bras radial du levier coudé définit la hauteur de l'épaulement du tambour. Un tambour comportant un épaulement de hauteur supérieure à 50 mm permet de réaliser la zone des talons de l'ébauche d'un pneumatique de dimension supérieure à 16" uniquement par une approche latérale des composants sur le tambour, sans contraindre ces composants (on comprend sans pliage ou déformation d'un des composants) lors de l'assemblage de la carcasse sur le tambour, tout en empêchant le glissement des composants entre eux lors de l'extraction de la carcasse.

L'invention sera mieux comprise grâce à la suite de la description, qui s'appuie sur les figures suivantes :
- la figure 1a est une vue en coupe axiale du tambour d'assemblage de l'invention avec uniquement deux segments adjacents représentés en position expansée,
- la figure 1b est une vue en coupe axiale du tambour d'assemblage de l'invention avec uniquement deux segments adjacents représentés en position rétractée,
- la figure 2a est une vue de face et la figure 2b est une vue en coupe transversale d'un tambour de l'invention en position expansée,
- la figure 3a est une vue de face et la figure 3b est une vue en coupe transversale d'un tambour de l'invention en position rétractée,
- la figure 4 est un schéma cinématique du tambour montrant un segment du premier groupe de segments du tambour en position expansée ;
- la figure 5 est un schéma cinématique du tambour montrant un segment du deuxième groupe de segments du tambour en position expansée ;
- la figure 6 est un schéma cinématique du tambour montrant le segment de la figure 4 en position rétractée;
- la figure 7 est un schéma cinématique du tambour montrant le segment de la figure 5 en position rétractée.

Sur les différentes figures, les éléments identiques ou similaires portent la même référence. Leur description n'est donc pas systématiquement reprise.

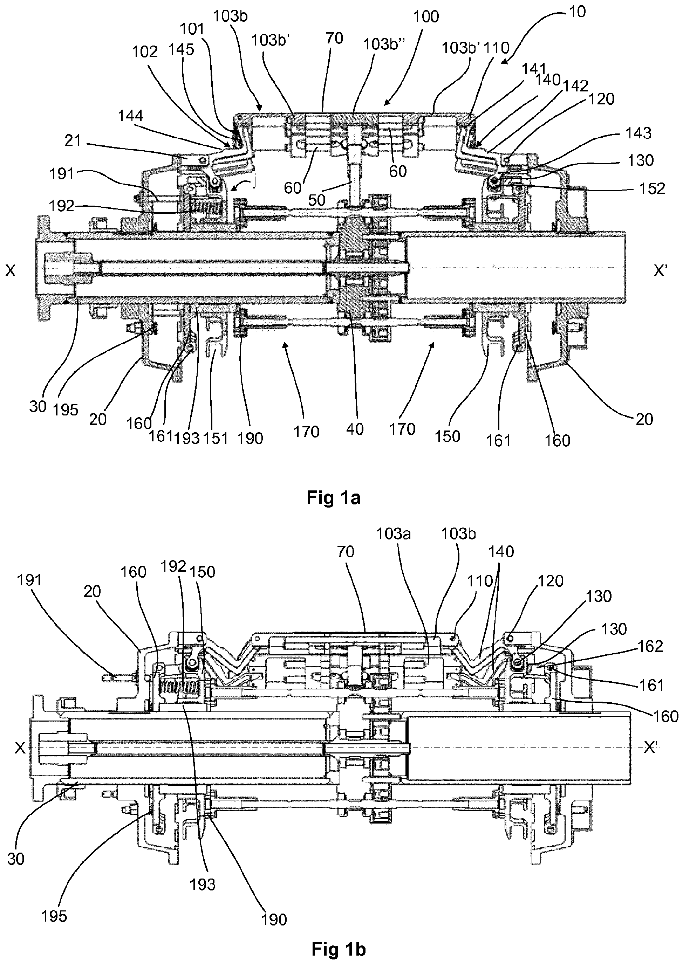

Aux figures 1a et 1b, on a représenté un tambour d'assemblage 10 comportant un support 20 solidaire d'un arbre central 30. L'arbre central 30 est entraîné en rotation avec le support 20 autour d'un axe longitudinal X-X' du tambour. Le tambour d'assemblage 10 présente une surface circonférentielle externe comportant une surface principale cylindrique 100 de réception de produits à assembler délimitée axialement par un épaulement 101 qui se prolonge axialement à sa base par une protubérance latérale 102. La surface principale cylindrique 100 est constituée par des segments juxtaposés circonférentiellement en position expansée ou de travail du tambour et montés à déplacement radial et axial par rapport au support 20 monté sur l'arbre 30. Les segments permettent de rétracter radialement le tambour 10 pour l'extraction des carcasses réalisées sur le tambour.

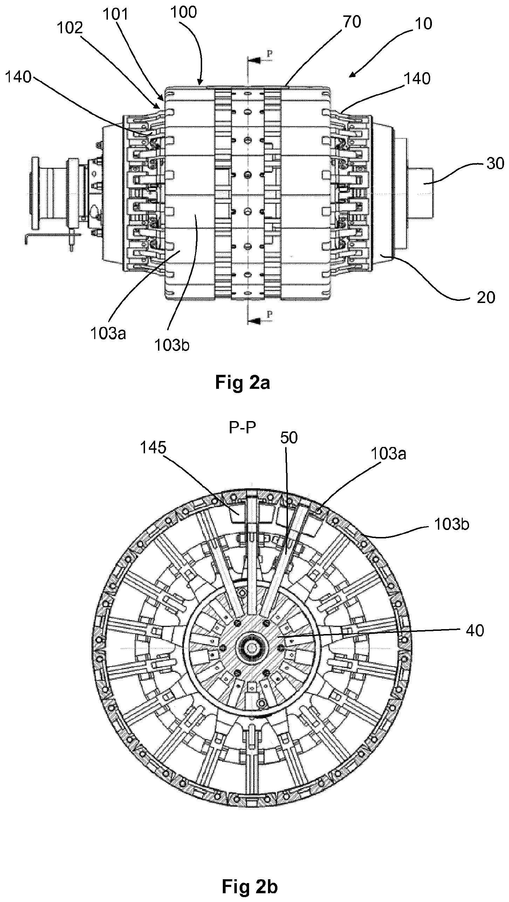

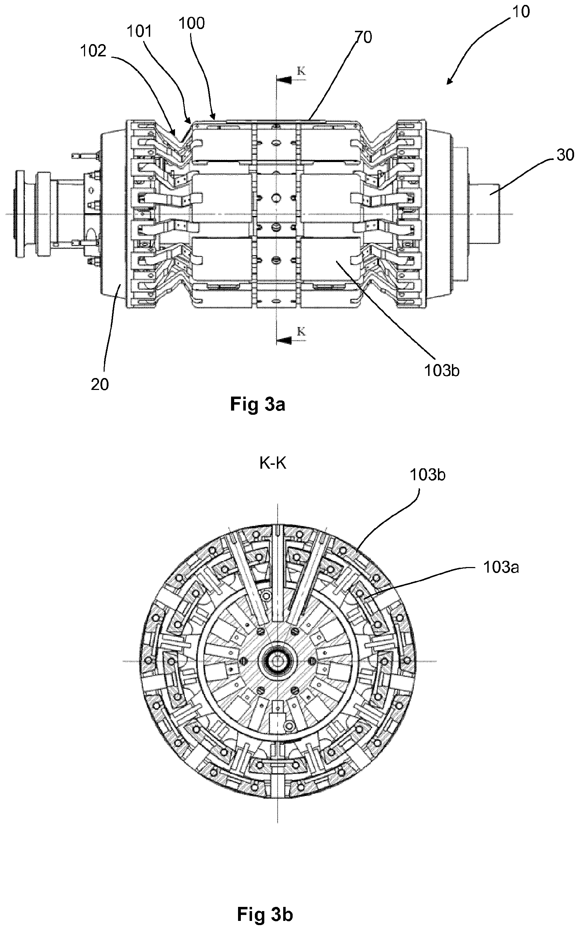

Les segments constituent un ensemble de plusieurs segments d'un premier et deuxième groupe de segments alternés et adjacents circonférentiellement. Ainsi, les faces latérales circonférentiellement des segments 103a d'un premier groupe de segments sont convergentes à l'extérieur du tambour, ces segments sont appelés segments clefs et les faces latérales circonférentiellement des segments 103b d'un deuxième groupe sont convergentes à l'intérieur du tambour, ces segments sont appelés segments voûtes. Lorsqu'ils sont actionnés, les segments clefs sont déplacés radialement vers l'intérieur avant les segments voûtes, entre une position expansée ou de travail du tambour visible aux figures 2a et 2b, quand les faces latérales de deux segments adjacents sont en contact, et une position rétractée de celui-ci visible aux figures 3a et 3b, le diamètre de l'enveloppe constituée par les surfaces externes des segments 103a étant inférieur à celui de l'enveloppe constituée par les surfaces externes des segments 103b en position rétractée ou pliée du tambour 10.

Le tambour 10 possède une protubérance latérale 102 solidaire de l'épaulement 101 présentant une surface d'appui généralement cylindrique de diamètre inférieur à celui de la surface principale cylindrique 100 de manière à ce que l'épaulement 101 reste dégagé pour permettre la pose des tringles et autres produits semi-finis destinés à réaliser la zone des talons par une approche latérale.

Selon l'invention, plusieurs leviers coudés 140 adjacents forment l'épaulement 101 et la protubérance latérale 102 du tambour 10. Le levier coudé 140 est une pièce rigide qui est montée articulée sur le bord d'un segment 103a, 103b et sur le support 20 du tambour. Le levier comprend ainsi un premier bras 141 sensiblement radial en position expansée du tambour qui se prolonge latéralement par un deuxième bras 142. Le bras 142 comprend une surface surélevée formant siège 144 agencée proche de la jonction avec le bras radial 141 et ayant une pente pour faciliter l'introduction des composants. Le siège 144 est apte à recevoir et supporter les composants de l'ébauche de pneumatique en vue du rouletage. La surface enveloppe passant par les premiers bras 141 forme l'épaulement 101 et celle passant par les bras 142, plus particulièrement les sièges 144, forme la protubérance latérale 102 du tambour d'assemblage 10. L'angle formé entre les bras 141 et 142 du levier 140 peut être droit, aigu ou obtus et varie entre 80° et 100°. Lorsque l'épaulement est incliné vers l'extérieur par rapport à la direction radiale (ou il forme un angle aigu avec la protubérance latérale), la zone des talons de la carcasse obtenue a une forme proche de la forme finale du pneumatique et les mouvements des composants sont très limités, voire nuls. Lorsque l'épaulement est incliné vers l'intérieur (ou il forme un angle obtus avec la protubérance radiale), la forme de l'ébauche est mieux adaptée à sa mise en presse.

Dans l'exemple représenté aux figures, le support 20 est réalisé sous forme d'un flasque d'extrémité fixé sur l'arbre 30, deux flasques d'extrémité délimitant latéralement le volume interne du tambour 10. Des brides 21 en U uniformément réparties sur la circonférence des flasques servent de support pour les articulations des leviers 140. Avantageusement, le levier coudé 140 est une pièce rigide ayant une forme générale en Z à trois bras 141, 142, 143 montée pivotante autour de trois articulations 110, 120, 130 d'axes perpendiculaires à l'axe longitudinal X-X' du tambour. Le levier 140 présente un premier bras 141 formant épaulement, un deuxième bras 142 formant protubérance latérale et un troisième bras 143 d'actionnement en pivotement. La première articulation 110 relie le levier 140 à un segment 103a, respectivement 103b, une deuxième articulation 120 le relie au support 20, et la troisième 130 le relie à une couronne latérale 150, 160 coaxiale à l'arbre 30 du tambour 10. A chaque extrémité du tambour 10, deux couronnes latérales 150, 160 sont montées rotatives avec le support 20 et avec possibilité de déplacement longitudinal parallèlement à l'axe X-X' du tambour. Plus particulièrement, les couronnes 150, 160 sont amenées à se déplacer en translation en sens opposés à l'aide d'un ensemble vis et écrou 170, tel qu'il sera expliqué par la suite.

Chaque segment 103a, 103b est réalisé en trois parties: deux parties d'extrémité 103a', 103b' identiques et symétriques par rapport à un plan vertical médian et une partie centrale 103a", 103b". Les parties d'extrémité des segments sont reliées moyennant les leviers coudés 140 au support 20, et les parties centrales des segments sont reliées par des bras radiaux 50 à une couronne centrale 40 fixée sur l'arbre 30. Les parties d'extrémité de chaque segment sont montées coulissantes à translation sur deux tiges longitudinales 60 montées fixes sur la partie centrale du segment et dépassant de part et d'autre de celle-ci. Les tiges longitudinales 60 servent de maintien et de guidage des parties d'extrémité par rapport à la partie centrale des segments. Ce montage permet d'empêcher le basculement des parties d'extrémité des segments et de les guider parallèlement à l'axe central X-X' du tambour 10 lors du déplacement des segments entre les deux positions extrêmes du tambour. La partie centrale de chaque segment supporte une tuile 70 montée fixe sur la surface externe de celle-ci et ayant une longueur telle qu'elle assure le recouvrement des interstices formés entre les différentes parties du segment lors du déplacement de celui-ci entre les deux positions extrêmes du tambour 10.

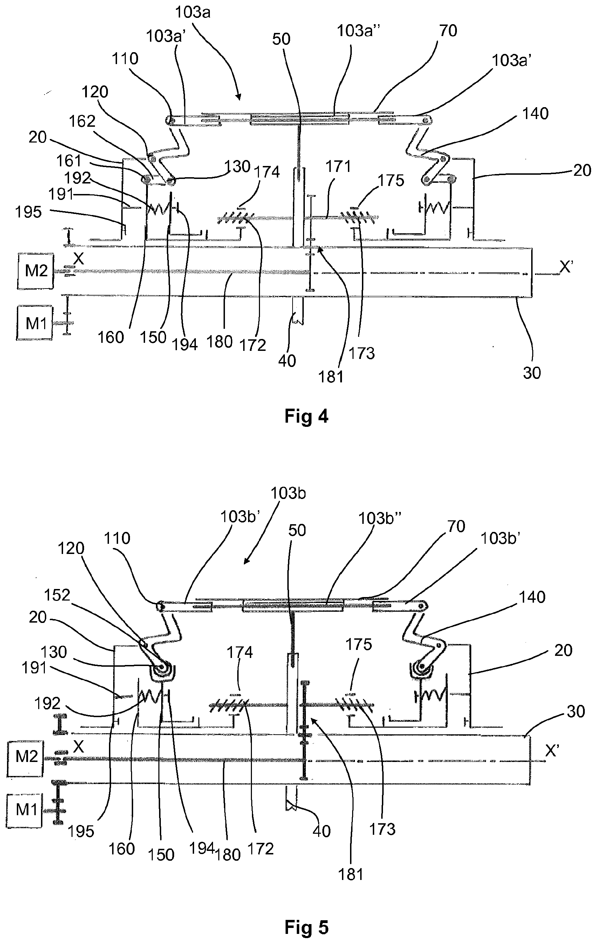

La cinématique du tambour et des segments 103a, 103b sera expliquée en référence aux figures 4 à 6. Le tambour est entraîné en rotation autour de son axe central X-X' à l'aide d'un moteur M1 couplé à l'arbre 30. Un moteur M2 est couplé à un arbre de transmission 180 qui entraîne en rotation une vis 171 via un jeu d'engrenages 181. La vis 171 comporte deux extrémités filetées, une première 172 ayant un pas à gauche et une deuxième 173 ayant un pas à droite. Chaque extrémité filetée coopère avec un écrou 174, 175 relié chacun à une couronne 160 pour permettre un rapprochement ou un éloignement symétrique des couronnes 160 selon le sens de rotation de la vis 171.

Dans ce qui suit, pour expliquer le concept de l'invention on va décrire en détail une seule moitié axiale, notamment l'appareillage situé à gauche sur les figures 4 à 6, le montage des segments étant symétrique par rapport à un plan médian vertical contenant l'axe longitudinal des bras radiaux 50.

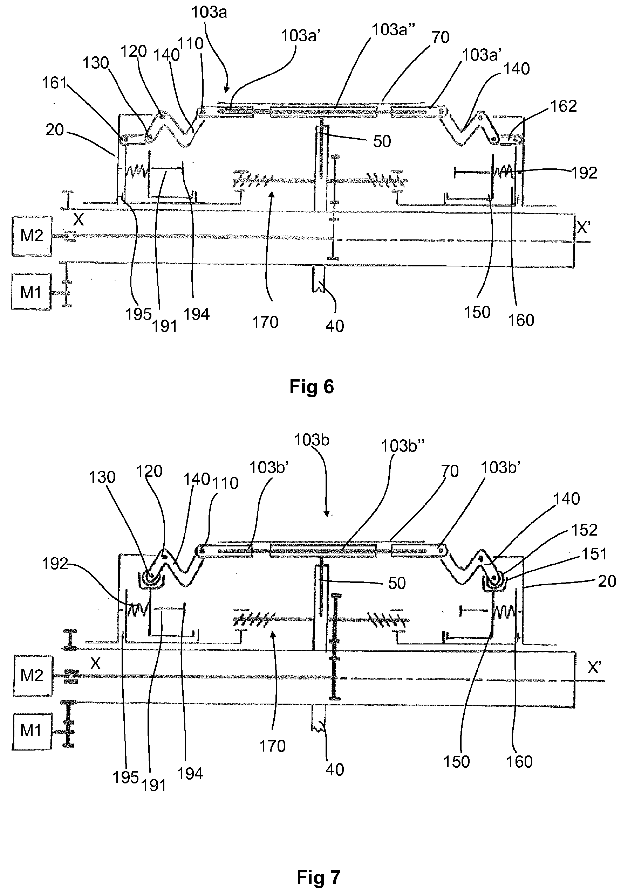

Sur la figure 4 on remarque un segment clé 103a en position expansée du tambour 10 et sur la figure 6 le même segment en position rétractée du tambour. La partie d'extrémité 103a' du segment clé a une forme de secteur de coque cylindrique d'une épaisseur de quelques mm à quelques cm dont le rebord latéral externe est arrondi et supporte l'axe d'une articulation 110 autour de laquelle est monté à pivotement un levier coudé 140. Le levier 140 est monté pivotant sur le support 20 autour d'une articulation 120 et il est aussi monté à possibilité de pivotement autour d'une articulation 130 par rapport à la couronne 160. Plus particulièrement, la couronne 160 a une forme de disque dont la périphérie est munie de bras radiaux comportant des brides 161 (fig. 1) de fixation des barres de liaison 162, chaque barre étant fixée moyennant un axe 163 sur la couronne 160. L'axe de pivotement de l'articulation 130 se trouve à l'extrémité de la barre de liaison 162 opposée à celle de fixation sur la couronne 160, le déplacement en translation longitudinale de la couronne 160 permettant le pivotement du levier 140 autour de l'axe de l'articulation 120, les oscillations de l'articulation 130 étant encaissées par la barre de liaison 162. Dans une variante, les bras radiaux de la couronne 160 peuvent être réalisés en une seule pièce avec les barres de liaison 162 dans quel cas leurs extrémités se terminent avec des gorges de guidage pour des galets montés à l'extrémité des bras 143.

Sur la figure 5 on remarque un segment voûte 103b en position expansée du tambour 10 et sur la figure 7 le même segment en position rétractée du tambour. La partie d'extrémité 103b' du segment voûte a une forme de secteur de coque cylindrique d'une épaisseur de quelques mm dont le rebord latéral externe comprend en son centre un axe d'articulation 110 autour de laquelle est monté à possibilité de pivotement un levier coudé 140. Le levier 140 est monté pivotant sur le support 20 autour d'une articulation 120 et il est aussi monté à possibilité de pivotement autour d'une articulation 130 par rapport à la couronne 150. Plus particulièrement, la couronne 150 a une forme générale de disque à plusieurs bras radiaux, l'extrémité (fig. 1) de chaque bras formant une gorge 151 de guidage pour un galet 152 monté à l'extrémité du bras 143. La gorge 151 a une section axiale en forme de U et une largeur dépassant celle d'un galet 152. La gorge 151 sert de logement de réception et de guidage du galet 152 lors du déplacement axial de la couronne 150.

Les couronnes 150 et 160 sont coaxiales à l'axe X-X' et sont montées de manière à ce que leurs bras radiaux respectifs soient alternés circonférentiellement, un bras d'une couronne se trouvant angulairement à égale distance des bras de l'autre couronne. Les segments clés 103a et les segments voûtes 103b sont équipés de leviers 140 identiques. En position expansée du tambour, lorsque les segments clés et voûtes sont adjacents circonférentiellement, tel que visible aux figures 4 et 5, les axes de pivotement des articulations 130 de tous les segments 103a, 103b se trouvent dans un même plan vertical passant par l'axe longitudinal du tambour et sont tangents à un cercle commun de centre passant par l'axe X-X' du tambour 10 et compris dans ledit plan vertical.

Les couronnes 150 et 160 sont montées à possibilité de déplacement en translation longitudinale lorsqu'elles sont actionnées par une plaque de butée 190 solidaire de l'extrémité de l'écrou 174 du dispositif vis-écrou 170. La couronne 150 est montée avec jeu sur trois tiges anti-rotation 191 parallèles à l'axe X-X' et uniformément réparties sur sa circonférence. Les tiges 191 comportent une butée haute 194 pour limiter la course axiale de la couronne 150 en position expansée du tambour. Une butée basse 195 est montée solidaire du support 20 et limite la course axiale de la couronne 160 en position rétractée du tambour. Les couronnes 150, 160 sont décalées axialement (on comprend dans la direction de l'axe longitudinal X-X'), la couronne 160 occupant la position la plus éloignée du centre du tambour 10. La plaque de butée 190 et la couronne 160 sont montées fixes aux extrémités latérales d'un coussinet 193. La couronne 150 est montée à possibilité de coulissement sur le coussinet 193.

En position expansée du tambour 10, les couronnes 150 et 160 sont maintenues à une distance prédéterminée l'une de l'autre à l'aide de ressorts 192 de compression, plusieurs ressorts 192 étant répartis circonférentiellement entre les deux couronnes. Un jeu fonctionnel « j » de valeur préétablie est prévu entre la face frontale de la plaque de butée 190 et celle en vis-à-vis de la couronne 150, ce jeu permettant d'actionner les segments clés 103a en premier.

Dans l'exemple présenté dans les figures, le bras 141 du levier coudé 140 a une hauteur de 50 mm, ce qui convient à la fabrication d'un pneumatique 16". Des leviers ayant des bras 141 de hauteur supérieure peuvent être prévus, en aménageant le volume libre interne du tambour pour permettre un déplacement axial plus important des couronnes 150, 160 et un basculement plus ample du levier 140 de manière à ce que l'articulation 110 puisse arriver à un niveau sensiblement inférieur au diamètre de l'articulation 120.

Le tambour illustré dans les figures comprend neuf segments clés 103a et neuf segments voûtes 103b. Le déplacement des segments 103a, 103b entre la position expansée et retirée du tambour est déterminé par la course axiale des couronnes 150 et 160. Un réglage des butées haute 194 et basse 195 permet de modifier le déplacement des segments.

En fonctionnement, on commence par commander le moteur M2 afin d'amener tous les segments en position expansée. Dans cette position, on confectionne une carcasse en enroulant les différentes nappes à base de gomme sur le tambour d'assemblage 10 mis en rotation par le moteur M1. Les tringles et autres produits profilés à base de gomme sont posés par une approche latérale sur l'épaulement 101 et prennent appui à leur base sur la protubérance latérale 102. Les faces latérales des leviers 140 sont avantageusement recouvertes de plaques 145 montées fixes sur ceux-ci afin de constituer une surface de pose sensiblement continue au niveau de l'épaulement 101 et sur lesquelles les couches de gomme puissent prendre appui lors du rouletage en vue de leur adhésion l'une par rapport à l'autre.

Lorsque la confection de la carcasse est terminée, on commande l'actionnement en sens contraire du moteur M2 pour collapser les segments. La mise en mouvement du dispositif vis-écrou 170 déplace la plaque de butée 190 qui pousse la couronne 160 en direction du flasque latéral en vis-à-vis ce qui déclenche, via le pivotement des leviers 140, le déplacement radial vers l'intérieur des segments clés 103a. On actionne ainsi uniquement les segments clés 103a sur une course de la plaque de butée 190 égale à la valeur du jeu « j », ensuite celle-ci pousse simultanément les couronnes 150 et 160, ce qui a pour résultat de déplacer radialement vers l'intérieur du tambour l'ensemble des segments clés 103a et des segments voûtes 103b. A la fin de la course de déplacement axial de la plaque de butée 190, tous les segments sont rétractés radialement, les segments clés se trouvent dans la position représentée à la figure 6, les segments voûtes dans celle de la figure 7, l'ensemble du tambour étant visible dans les figures 3a et 3b. En faisant pivoter les leviers 140, les parties d'extrémité 103a', 103b' des segments 103a, 103b se déplacent radialement vers l'intérieur et axialement les unes vers les autres. En même temps l'épaulement se déplace vers l'intérieur et se trouve complètement en dessous du diamètre interne de la zone des talons et la carcasse peut être retirée du tambour d'assemblage 10 et envoyée en finition.

D'autres variantes et modes de réalisation de l'invention peuvent être envisagés sans sortir du cadre de l'invention.

## Revendications

1. Tambour d'assemblage (10) pour la fabrication d'un pneumatique comprenant un support (20), un arbre central (30) et une surface circonférentielle externe coaxiale à l'axe de rotation du tambour et comportant une surface principale cylindrique (100) délimitée axialement de chaque côté par un épaulement (101) se prolongeant par une protubérance latérale (102) de réception de produits à assembler, plusieurs segments définissant ensemble la surface principale cylindrique, lesdits segments étant divisés en des premier et deuxième groupe de segments (103a, 103b) adjacents montés mobiles entre une première position dans laquelle ils sont juxtaposés circonférentiellement et une deuxième position dans laquelle les segments adjacents sont décalés radialement, dans ledit tambour plusieurs leviers coudés (140) adjacents formant, en position expansée du tambour, l'épaulement (101) et la protubérance (102) et chaque levier coudé (140) étant monté articulé sur le segment (103a, 103b) et sur le support (20).

2. Tambour selon la revendication 1, **caractérisé en ce qu'**il comprend des moyens d'actionnement positif en pivotement de chaque levier coudé (140) autour d'un axe perpendiculaire à l'axe (X-X') du tambour.

3. Tambour selon l'une des revendications 1 ou 2, **caractérisé en ce que** les segments (103a, 103b) comprennent des parties d'extrémité (103a', 103b') déplaçables axialement et radialement entre une première position dans laquelle la surface principale cylindrique des segments présente un diamètre et une longueur axiale supérieures à ceux d'une deuxième position.

4. Tambour selon la revendication précédente, **caractérisé en ce que** les segments (103a, 103b) comprennent des parties centrales (103a", 103b") supportées moyennant des bras radiaux (50) par une couronne centrale (40) montée sur l'arbre central (30) du tambour et que lesdites parties d'extrémité (103a', 103b') sont montées à coulissement par rapport aux parties centrales.

5. Tambour selon l'une des revendications précédentes, **caractérisé en ce que** ledit levier coudé (140) est une pièce rigide monobloc ayant une forme générale en Z.

6. Tambour selon la revendication précédente, **caractérisé en ce que** les leviers coudés (140) sont mobiles en pivotement autour d'un axe perpendiculaire à l'axe longitudinal (X-X') du tambour en étant entraînés par une couronne (160, 150) mobile en translation sur l'arbre central (30).

7. Tambour selon la revendication 6, **caractérisé en ce que** chaque couronne (160, 150) est reliée à un groupe de segments (103a, 103b) et les couronnes (160, 150) sont montées à distance l'une par rapport à l'autre sur l'arbre central (30).

8. Tambour selon la revendication 7, **caractérisé en ce qu'**il comprend des moyens d'actionnement en un rapprochement ou un éloignement symétrique des couronnes (160, 150) l'une par rapport à l'autre.

9. Tambour selon la revendication 8, **caractérisé en ce que** lesdits moyens d'actionnement comprennent une plaque de butée (190) solidaire de la couronne (160) et montée avec un jeu axial préétabli par rapport à la couronne (150).

10. Tambour selon l'une des revendications précédentes, **caractérisé en ce que** le levier coudé (140) comprend un bras sensiblement radial (141) en position expansée de hauteur supérieure ou égale à 50 mm.

## Patentansprüche

1. Aufbautrommel (10) zur Herstellung eines Reifens, die einen Träger (20), eine Mittelwelle (30) und eine äußere Umfangsfläche, die koaxial zur Drehachse der Trommel verläuft, umfasst, und eine zylindrische Hauptfläche (100) aufweist, die auf jeder Seite von einem Absatz (101) axial begrenzt ist, der sich durch einen seitlichen Vorsprung (102) zur Aufnahme von Produkten, die aufgebaut werden sollen, fortsetzt, wobei mehrere Segmente zusammen die zylindrische Hauptfläche definieren, wobei die Segmente in eine erste und eine zweite Gruppe von angrenzenden Segmenten (103a, 103b) unterteilt sind, die zwischen einer ersten Position, in der sie umfangsmäßig nebeneinander liegen, und einer zweiten Position, in der die angrenzenden Segmente radial verschoben sind, beweglich angebracht sind, wobei in der Trommel mehrere angrenzende Winkelhebel (140) in der aufgeweiteten Position der Trommel den Absatz (101) und den Vorsprung (102) bilden und jeder Winkelhebel (140) an dem Segment (103a, 103b) und an dem Träger (20) gelenkig angebracht ist.

2. Trommel nach Anspruch 1, **dadurch gekennzeichnet, dass** sie Mittel zur positiven Schwenkbetätigung jedes Winkelhebels (140) um eine Achse, die senkrecht zur Achse (X-X') der Trommel verläuft, umfasst.

3. Trommel nach einem der Ansprüche 1 oder 2, **dadurch gekennzeichnet, dass** die Segmente (103a, 103b) Endbereiche (103a', 103b') umfassen, die zwischen einer ersten Position, in der die zylindrische Hauptfläche der Segmente einen Durchmesser und eine axiale Länge aufweist, die größer als jene einer zweiten Position sind, axial und radial beweglich sind.

4. Trommel nach dem vorhergehenden Anspruch, **dadurch gekennzeichnet, dass** die Segmente (103a, 103b) Mittelbereiche (103a", 103b") umfassen, die mithilfe von radialen Armen (50) von einer mittleren Krone (40) getragen werden, die auf der Mittelwelle (30) der Trommel befestigt ist, und dass die Endbereiche (103a', 103b') bezogen auf die Mittelbereiche verschiebbar angebracht sind.

5. Trommel nach einem der vorhergehenden Ansprüche, **dadurch gekennzeichnet, dass** der Winkelhebel (140) ein einstückiges starres Teil ist, das die allgemeine Form eines Z aufweist.

6. Trommel nach dem vorhergehenden Anspruch, **dadurch gekennzeichnet, dass** die Winkelhebel (140) um eine Achse schwenkbeweglich sind, die senkrecht zur Längsachse (X-X') der Trommel verläuft, wobei sie von einer Krone (160, 150), die auf der Mittelwelle (30) translatorisch beweglich ist, angetrieben werden.

7. Trommel nach Anspruch 6, **dadurch gekennzeichnet, dass** jede Krone (160, 150) mit einer Gruppe von Segmenten (103a, 103b) verbunden ist und die Kronen (160, 150) bezogen aufeinander beabstandet an der Mittelwelle (30) angebracht sind.

8. Trommel nach Anspruch 7, **dadurch gekennzeichnet, dass** sie Mittel zur Betätigung durch eine symmetrische Annäherung oder Entfernung der Kronen (160, 150) bezogen aufeinander umfasst.

9. Trommel nach Anspruch 8, **dadurch gekennzeichnet, dass** die Mittel zur Betätigung eine Anschlagplatte (190) umfassen, die fest mit der Krone (160) verbunden ist und mit einem vorher festgelegten axialen Spiel bezogen auf die Krone (150) angebracht ist.

10. Trommel nach einem der vorhergehenden Ansprüche, **dadurch gekennzeichnet, dass** der Winkelhebel (140) in der aufgeweiteten Position einen im Wesentlichen radialen Arm (141) einer Höhe größer oder gleich 50 mm umfasst.

## Claims

1. Building drum (10) for building a tyre comprising a support (20), a central shaft (30) and an outer circumferential surface coaxial with the axis of rotation of the drum and comprising a principal cylindrical surface (100) axially delimited on both sides by a shoulder (101) extended by a lateral protuberance (102) for receiving the products to be assembled, several segments together defining the principal cylindrical surface, the said segments being divided into first and second groups of adjacent segments (103a, 103b) mounted to move between a first position in which they are circumferentially juxtaposed and a second position in which adjacent segments are radially offset, building drum in which several adjacent elbow levers (140) form the shoulder (101) and the protuberance (102) in the expanded position of the drum and each elbow lever (140) is mounted with articulation on the segment (103a, 103b) and on the support (20).

2. Drum according to claim 1, **characterized in that** it comprises positive activating means for pivoting each elbow lever (140) about an axis perpendicular to the axis (X-X') of the drum.

3. Drum according to either of claims 1 or 2, **characterized in that** the segments (103a, 103b) comprise end parts (103a', 103b') which can be moved axially and radially between a first position in which the principal cylindrical surface of the segments has a diameter and axial length which are greater than those of a second position.

4. Drum according to the preceding claim, **characterized in that** the segments (103a, 103b) comprise central parts (103a", 103b") supported through radial arms (50) by a central collar (40) mounted on the central shaft (30) of the drum and that the said end parts (103a', 103b') are mounted so as to slide in relation to the central parts.

5. Drum according to any one of the preceding claims, **characterized in that** the said elbow lever (140) is a one-piece rigid part having the general shape of a Z.

6. Drum according to the preceding claim, **characterized in that** the elbow levers (140) can move by pivoting about an axis perpendicular to the longitudinal axis (X-X') of the drum when driven by a collar (160, 150) which can move in translation on the central shaft (30).

7. Drum according to claim 6, **characterized in that** each collar (160, 150) is connected to a group of segments (103a, 103b) and that the collars (160, 150) are mounted at a distance from each other on the central shaft (30).

8. Drum according to claim 7, **characterized in that** it comprises means for activating the collars (160, 150) to move together and apart symmetrically in relation to each other.

9. Drum according to claim 8, **characterized in that** the said activation means comprise a stop plate (190) of one piece with the collar (160) and mounted with predetermined axial play in relation to the collar (150).

10. Drum according to any one of the preceding claims, **characterized in that** the elbow lever (140) comprises a substantially radial arm (141) of height 50 mm or more in the expanded position.
